(19) Europäisches Patentamt / European Patent Office / Office européen des brevets

(11) **EP 1 884 878 A1**

(12) **EUROPEAN PATENT APPLICATION**

(43) Date of publication:
**06.02.2008 Bulletin 2008/06**

(51) Int Cl.:
*G06F 17/50* [(2006.01)]        *G06F 19/00* [(2006.01)]

(21) Application number: **06118311.7**

(22) Date of filing: **02.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Hitachi Ltd.**
**Tokyo (JP)**

(72) Inventor: **Sievers, Fabian**
**Dublin 4 (IE)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

(54) **Computer system for simulating a physical system**

(57)     The present invention provides a computer system for simulating a physical system having first and second properties which determine a third, measurable property of the physical system. The computer system comprises a first module adapted to provide a set of measured values of the first property, a second module adapted to generate a set of simulated values of the first property using a given value of a parameter, a third module adapted to deconvolve the set of measured values of the third property of the physical system using the set of simulated values so as to provide a set of derived values of the second property of the physical system and a fourth module adapted to determine whether any of the derived values are negative and, in dependence upon any of the derived values being negative, causing the given value of the parameter to be changed.

Fig. 1

EP 1 884 878 A1

**Description**

The present invention relates to a computer system for and a method of simulating a physical system.

A standard method for fitting a model to experimental data is non-linear regression.

In this method, an analytical form of the solution must be known. If the solution is derived from a system of differential equations, then it may be difficult to find a solution since the system of differential equations must be known, which requires deep insight into the underlying physical processes of the system.

Once the analytical form of the solution has been determined, parameters are iteratively fitted using a suitable algorithm, such as a Marquardt-Levenberg algorithm. However, this iteration does not necessarily converge. Whether or not the iteration converges and the rate of convergence depends upon a starting configuration. Choosing the proper starting configuration also requires a deep understanding of the system.

For example, a pharmacologist skilled in pharmacokinetics usually has some idea about the pathways involved in the absorption and excretion of a drug under consideration. Also, the values of the parameters may correspond to physiological observables, such as blood flow or liver volume, or may be close to parameters determined in a previous investigation. Someone not familiar with pharmacokinetics may have difficulties identifying a system of differential equations and/or picking an appropriate starting configuration.

Time development of a physical system can often be expressed by a system of differential equations. Frequently this system is linear, of first order, with constant coefficients and its variables cannot attain negative values. If observations are made for this system, then it may be desirable to determine the constants that define the system of differential equations.

The present invention seeks to provide a computer system for and a method of simulating (or "modelling") a physical system.

According to a first aspect of the present invention there is provided a computer system for simulating a physical system having first and second properties which determine a third, measurable property of the physical system, the computer system comprising a first module adapted to generate a set of simulated values of the first property using a given value of a parameter, a second module adapted to deconvolve a set of measured values of the third property using the set of simulated values so as to provide a set of derived values of the second property of the physical system and a third module adapted to determine whether any of the derived values are negative and, in dependence upon any of the derived values being negative, causing the given value of the parameter to be changed.

Thus, physical system can be easily simulated.

The first and second properties may be amount-like properties. The third property may be an amount-like property. The first module may be arranged to generate the set of simulated values of the first property using the given value of the parameter by using a function comprising an exponential having an exponent including the given value of the parameter. The function may be a decay function and the parameter may be a decay constant. The function may be a growth function and the parameter may be a growth constant. The exponent includes time as a variable.

The computer system may further comprise a fourth module adapted to receive the set of measured values of the third property and to provide a set of equally-spaced measured values to the second module. The values of the third property may be equally-spaced in time. If the measured set of values of the third property are equally-spaced, then a Fast Fourier Transform module can be used to deconvolve the data.

The computer system may further comprise a fifth module adapted to generate a value of the parameter and to provide said value to the first module to allow generation of a set of simulated values of the first property using said value. The computer system may further comprise a sixth module for outputting the parameter, wherein the third module is adapted to output the parameter to the sixth module.

The set of measured values may comprise values of the third property measured at different times.

The first and second properties may be flows of an amount of chemical. The third property may be an amount of a chemical, such as a drug or metabolite.

The third module may be adapted to store said parameter in storage. The computer system may be adapted to display the parameter.

The physical system may have fourth and fifth properties which determine a sixth, measurable property of the physical system and the first module may be adapted to generate a first set of simulated values of the first property using a given value of a first parameter and to generate a second set of simulated values of the fourth property using a given value of a second parameter, the second module may be adapted to deconvolve a first set of measured values of the third property using the first set of simulated values so as to provide a first set of derived values of the second property and to deconvolve a second, different set of measured values of the sixth property using the second set of simulated values so as to provide a second set of derived values of the fifth property and third module may be adapted to calculate a set of ratios by comparing corresponding ones of the first and second sets of derived values and to determine whether ratios in said set are constant.

The fourth and fifth properties may be amount-like properties. The sixth property may be an amount-like property.

The third module may be adapted to fit a line to said set of ratios. The values of the first and second parameters may be generated using increasing values of the first system parameter and varying values of the second parameter.

The third amount-like property may be an amount of a drug and the sixth property may be an amount of metabolite.

According to a second aspect of the present invention there is provided a computer system for simulating a physical system having first and second properties which determine a third, measurable property of the physical system, the computer system comprising at least one processor and memory, the processor configured to generate a set of simulated values of the first property using a given value of parameter, to deconvolve a set of measured values of the third property using the set of simulated values of the first property of the physical system so as to provide a set of derived values of the second property of the physical system and to determine whether any of the derived values are negative and, in dependence upon any of the derived values being negative, causing the value of the given parameter to be changed.

The parameter may be decay constant. The set of measured values may comprise values of the first property measured at different times.

The amount-like property may be an amount (e.g. mass, volume or concentration) of a chemical, such as a drug or metabolite.

According to a third aspect of the present invention there is provided a method of simulating a physical system having first and second properties which determine a third, measurable property of the physical system, the method comprising generating a set of simulated values of the first property using a given value of a parameter, deconvolving a set of measured values of the third property using the set of simulated values of the first property of the physical system so as to provide a set of derived values of the second property of the physical system; and determining whether any of the derived values are negative and, in dependence upon any of the derived values being negative, causing the given value of the parameter to be changed.

According to a fourth aspect of the present invention there is provided a computer program comprising instructions for performing the method.

According to a fifth aspect of the present invention there is provided a computer program product comprising a computer-readable medium storing the computer program.

Embodiments of the present invention will now be described, by way of example, with reference to the accompanying drawings in which:

Figure 1 is a schematic block diagram of a computer system;
Figure 2 is a flow chart illustrating a first method performed by the computer system shown in Figure 1;
Figure 3a is graphical representation of a test function;
Figure 3b is a graphical representation of discrete values of the test function shown in Figure 3a;
Figure 4a is a block diagram of a first drug model;
Figure 4b is a block diagram of a second drug model;
Figure 5 is a graphical representation of the amount of drug found in liver and gut and also the amount of drug and metabolite found in blood samples taken at different times over a given period
Figure 6 is a flow chart illustrating a second method performed by the computer system shown in Figure 1;
Figure 7 is a graphical representation of a path followed to find a solution;
Figure 8 is a graphical representation of measurements of the amount of drug and metabolite found in blood samples taken at different times over a given period;
Figure 9a is a graphical representation of first and second time-dependent rates of flow of drug into a compartment obtained by deconvolving the measurement of the amount of drug shown in Figure 8 with discrete values of first and second time-dependent rates of flow of drug out of the compartment defined using first and second decay constants;
Figure 9b is a more detailed view of parts of the first and second time-dependent rates shown in Figure 9a;
Figure 10 is a graphical representation of measurements of amounts of drug and metabolite found in blood samples taken at different times over a shortened period;
Figure 11 is a graphical representation of time-dependent rates of flow of drug and metabolite into a compartment obtained by deconvolving the measurements of the amount of drug shown in Figure 10 with discrete values of estimates of time-dependent rates of flow of drug and metabolite out of the compartment; and
Figure 12 is a graphical representation of ratio of inflows into two compartments obtained from deconvolutions using different estimates of decay constants of flows out of the compartments.

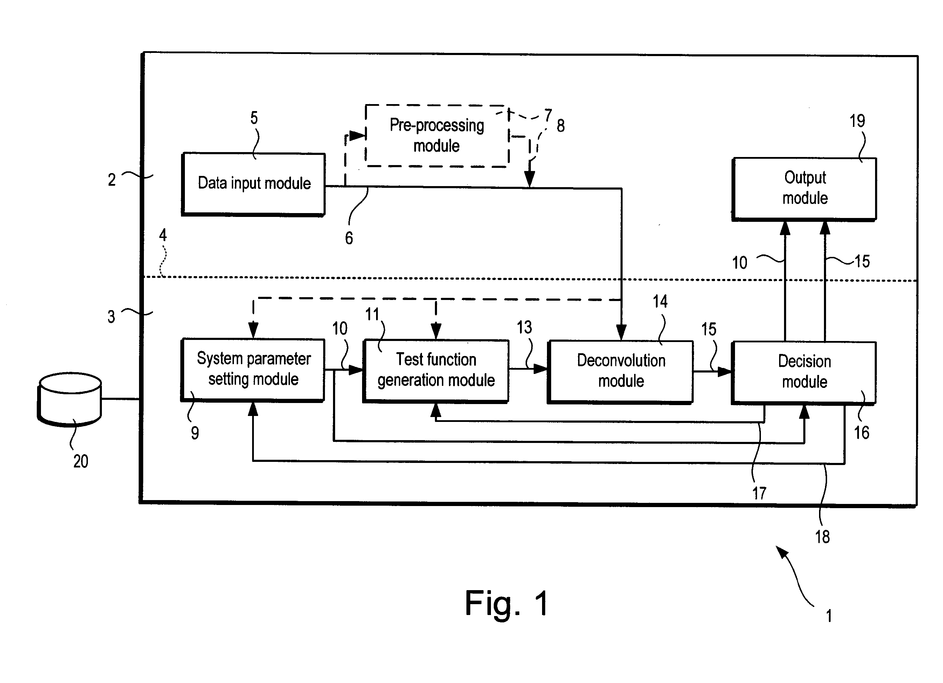

Referring to Figure 1, a computer system 1 in accordance with the present invention is shown. In this embodiment, the computer system 1 is distributed and includes a client 2 and server 3 connected via a network 4.

On the client-side, the computer system 1 includes a data input module 5 for supplying measurement data in the form of a set of data points 6 and, optionally, a pre-processing module 7 for conditioning the measurement data 6 to provide equally-spaced data points 8. By "equally spaced" we mean equally spaced in respect of one variable, such as time.

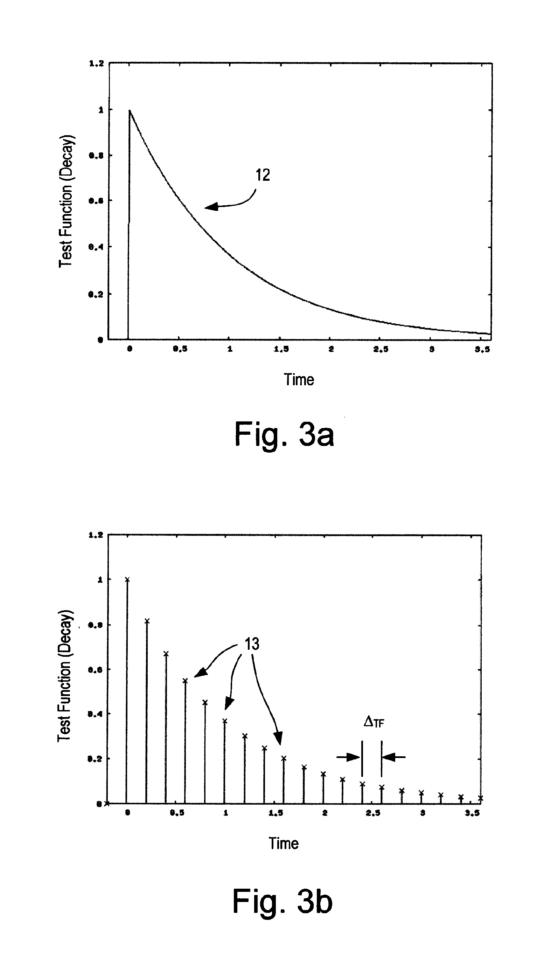

On the server-side, the computer system 1 includes a module 9 for setting a system parameter 10. In this embodiment, the system parameter 10 is a decay constant. The server 3 also includes a module 11 for determining a test function 12 (Figure 3a) dependent on the system parameter 10 and outputting discrete values 13 of the test function, a module 14 for deconvolving the measured data points 6, 8 using the discrete values 13 of the test function and obtaining a set of deconvolved data points 15 and a module 16 for inspecting the deconvolved data points 15 and outputting control signals 17, 18 to the system parameter setting module 9.

On the client-side, the computer system 1 includes a module 19 for outputting the system parameter 10 and, optionally, the deconvolved data points 15.

The computer system 1 includes an optional database 20 for storing data points 6, 8, system parameters 10, information about the test function 12 and/or deconvolved data points 15.

The client 2 comprises at least one processor (not shown) operatively connected, via a bus, to memory (not shown) storing one or more computer programs (not shown) for providing data input, pre-processing and data output modules 5, 7, 19. The client 2 includes an input/output interface connecting the processor(s) (not shown) to a network interface, to peripheral devices, such keyboard, mouse and display, and to storage, for example in the form of at least one hard disk drive, and removable storage, such as CD and DVD.

The server 3 comprises at least one processor (not shown) operatively connected, via a bus, to memory (not shown) storing one or more computer programs (not shown) for providing decay constant setting, test function providing, deconvolving and determining modules 9, 11, 14, 16. The server 3 includes an input/output interface connecting the processor(s) (not shown) to a network interface, to optional peripheral devices, such keyboard, mouse and display and to storage, for example in the form of at least one hard disk drive, and removable storage.

As will be explained in more detail later, a user of the computer system 1 does not need to know the complete set of differential equations for modelling a physical system. Consequently, the set of differential equations does not have to be solved explicitly. Only sections of the system for which observations are available, herein referred to as "compartments", need be considered. The rate of decay (or at least a lower limit of the rate of decay) for a compartment is obtained from an observed quantity.

The amount of a quantity inside a compartment over time is determined by the flow into (growth) and the flow out of (decay) the compartment. If the decay process, having a decay constant $\delta$, is linear, then the time development of the contents $C(t)$ of a compartment is the convolution, designated by $\oplus$, of the growth process $G(t)$ and the decay process $D(t) = e^{-\delta t}$, namely:

$$C(t) = (G \oplus D)(t) \qquad\qquad (1)$$

$$= \int_0^t G(\tau)e^{-\delta(t-\tau)}d\tau \qquad\qquad (1')$$

If, on the other hand, the contents of the compartment and the decay process are known, then equation (1) can be inverted and the growth process can be determined using deconvolution, designated by $\oplus^{-1}$:

$$G(t) = (C \oplus^{-1} D)(t) \qquad\qquad (2a)$$

Fast Fourier Transforms (FFT) can be used as an efficient method for deconvolving two functions. The two functions can be deconvolved using linear deconvolution algorithms, such as inverse filtering or Wiener filtering. The two functions can be deconvolved using non-linear deconvolution algorithms, such as the so-called "CLEAN" algorithm, the maximum entropy method or the so-called "LUCY" algorithm.

If the decay process is not known, then the fact that the inflow cannot be negative (which is unphysical) can be used to determine a lower limit for the decay constant.

The net flow into the compartment may originate from a single compartment or it may originate from a superposition of flows from multiple compartments. In a linear system of first order with constant coefficients, an inflow into a compartment equals the outflow from an upstream compartment. The outflow from the upstream compartment is proportional to the amount contained in the upstream compartment and the constant of proportionality corresponding is the growth constant.

Equation 1 above can be inverted using deconvolution such that:

$$D(t) = (C \oplus^{-1} G)(t) \tag{2b}$$

In the methods hereinafter described, this alternative deconvolution is not used, although it can be, particularly in cases where the form of G is known or can be guessed.

In the following description, the system parameter is a decay constant and so the terms "decay constant" and "system parameter" may be used interchangeably.

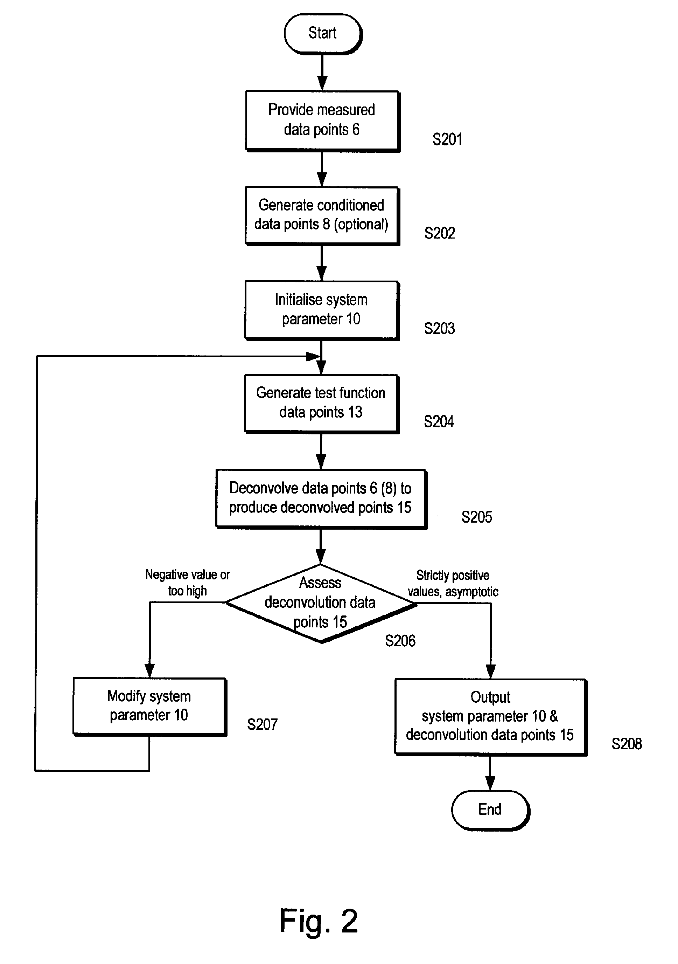

Referring to Figures 1 and 2, a first method of determining a system parameter in accordance with the present invention will now be described.

Measurement apparatus (not shown) takes measurements of a physical system (not shown) and stores measurement data 6.

In a pharmacokinetic study, taking measurements comprises taking blood samples at different times over a given period of time and measuring (or determining) concentrations of a relevant substance in each blood sample. The measurement data is in the form of a set of values ordered, e.g. in time. In this embodiment, the values are of drug or metabolite concentration. The measurements need not be taken at equal intervals and so the values need not be equally spaced, e.g. in time.

The measurement data 6 are transferred to the computer system 1 (e.g. on a computer-readable medium or via a network) and supplied through the data input module 5 (step S201).

The pre-processing module 7 may process the measurement data 6 to provide equally-spaced and/or more closely separated data points 8 (step S202). For example, the pre-processing module 7 may introduce additional values into a sequence of values using, for instance, interpolation. The module 7 may replace values with one or more other values, for example, by fitting a line to at least two values and obtaining equally-spaced data points from the fitted line. The module 7 may even remove selected data points. The module 7 may set any missing point to zero or to the value of the previously measured point. The module 7 may use methods of spectral analysis, such as Lomb's normalised periodogram method.

The system parameter setting module 9 provides an initial value of decay constant, $\delta_0$ (step S203). The module 9 may randomly pick the initial value of decay constant. Alternatively, the module 9 may chose the initial value of decay constant based or guided by the data. For example, an (exponential) tail in the data may be identified and an exponential function may be fitted to it using a "least squares" method. Fitting an exponential to the tail of the data in this way will usually provide a fit of the right order of magnitude.

Referring also to Figures 3a and 3b, examples of a test function 12 and discrete values 13 of the test function 12 are shown respectively.

The test function generating module 11 generates discrete values 13 of the test function 12, in this case an exponential function with exponent $\delta_0$. Preferably, the step size $\Delta_{TF}$ of the discrete test function corresponds to the step size $\Delta_D$ of the measured data points 6, 8. The test function 13 is only defined for times greater than 0 according to the principle of causality, thus reflecting the fact that a contribution can only flow out of a compartment after it has entered it. This is reflected in the lower integration limit of equation 1' above.

Referring again to Figures 1 and 2, the deconvolving module 14 deconvolves the measured data points 6, 8 using the discretised test-function 13 (step S205).

If the measurement data 6, 8 comprises equidistant data points, then FFT can be used.

Alternatively, if the number of data points is small and computation time is not a problem, the (discretised) convolution $C_i = \sum_{j=0}^{i} D_j G_{i-j}$ may be inverted. This can be written as $[C] = [[D]] \times [G]$, where $[C]$ and $[G]$ are vectors and $[[D]]$ is a triangular matrix, having elements $D_{\{i,j\}} = 0$, if $i < j$, and $D_{\{i,j\}} = e^{-\delta(i-j)\tau}$, if $i \geq j$. Thus, a solution for $[G]$ may be easily found. If, however, the data is not equidistantly spaced, then rows are eliminated from the system of linear equations and $[[D]]$ is no longer a triangular matrix. The solution for an under-determined system of linear equations, such as this, may not be unique.

The result of this deconvolution is a collection of data points 15 which represents flow into the compartment for a given decay constant.

The decision module 16 determines whether any of these points are negative or too large (step S206).

If any of the points 15 are negative, then the value of the decay constant is too small and is increased. The rate of increase is adjusted dynamically and is described in more detail later.

If, on the other hand, the deconvolved points 15 are all positive and the lowest-valued deconvolved point (usually found in the "tail" of the set of points 15) is "too high", e.g. greater than 1% of the highest-valued deconvolution point 15, then the value of the decay constant is not representative and so its value should be decreased. Again, the rate of decrease is adjusted dynamically. Thus, the decision module 16 instructs the system parameter setting module 9 to modify the value of decay constant (step S207). Another iteration of steps S204 & 205 is performed using the modified value of decay constant, $\delta$.

The rate of increase or decrease is adjusted dynamically by reducing a multiplication factor ($k$) used to generate a new value of decay function ($\delta$) whenever there is a change from all the deconvolved data points 15 being positive to at least one deconvolved data point 15 being negative or *vice versa.* Thus, if there is change going from a first value of decay constant, $\delta_1$, to a second value of decay constant, $\delta_2$, where $\delta_2 = k_1\delta_1$ and $k_1 > 1$, then the multiplicative factor is reduced $k_1 \rightarrow k_2$, where $k_1 > k_2$, e.g. $k_2 = \sqrt{k_1}$, and a third value of decay factory, $\delta_3$, lying between the first value, $\delta_1$, and the second value, $\delta_2$, is used, i.e. $\delta_3 = k_2\delta_1$. For example, $k_1 = 1.01$ and $k_2 =1.005$. This process is repeated to yield ever-smaller values of the multiplicative factor, e.g. $k_3 = 1.0025$ etc, for example, until machine precision is reached and the decay constant does not change, i.e. $\delta_n = \delta_{n+1}$. Machine precision is usually defined in terms of a value $\varepsilon$, wherein $1 + \varepsilon$ is indistinguishable from 1. In C-programming language, this value is denoted FLT_EPSILON having a value of 1.1920928955078e-7 (single precision) or DBL_ EPSILON having a value of 2.2204460492503131e-16 (double precision).

Thus, if all points 15 of the deconvolution are positive, but one or more points 15 of the deconvolution would be negative for the deconvolution $e^{-(\delta-\alpha)}{}_t$, where $\alpha$, is small and can be defined by the user, for example $0.01\delta$, then the decision module 16 reports the value 10 of the decay constant $\delta$ and, optionally, the deconvolution data points 15 (step S208).

The decay constant 10 and/or the deconvolution data points 15 is (are) stored in storage (not shown) at the server 2 and/or client 3. The decay constant 10 and/or the deconvolution 15 may be displayed on a display (not shown) at the client 2. The decay constant 10 and/or the deconvolution 15 may be supplied to another module (not shown) for further processing, e.g. computation of a larger model.

The way the algorithm converges, i.e. the position where the deconvolution becomes negative as a function of the exponent of the test function, can cross-validate the exponent of the decay process. In particular, it can help distinguish between growth and decay processes, as suggested in equation 2b above.

If error ranges are given for the physical measurements, then the above-mentioned method may be performed for upper and lower values of the ranges. If the deconvolution method is carried out in conjunction with a regression-based method, then results from the former may assist in eliminating wrong models used in the latter.

By using the deconvolution 15 and by making assumptions about the model, the method described earlier can be modified to determine correlations amongst the growth constants, as will now be described in more detail.

In a second method of determining system parameter in accordance with the present invention, two sets of measurement data (or "data sets") are used. The method is based on certain assumptions, as will now be explained.

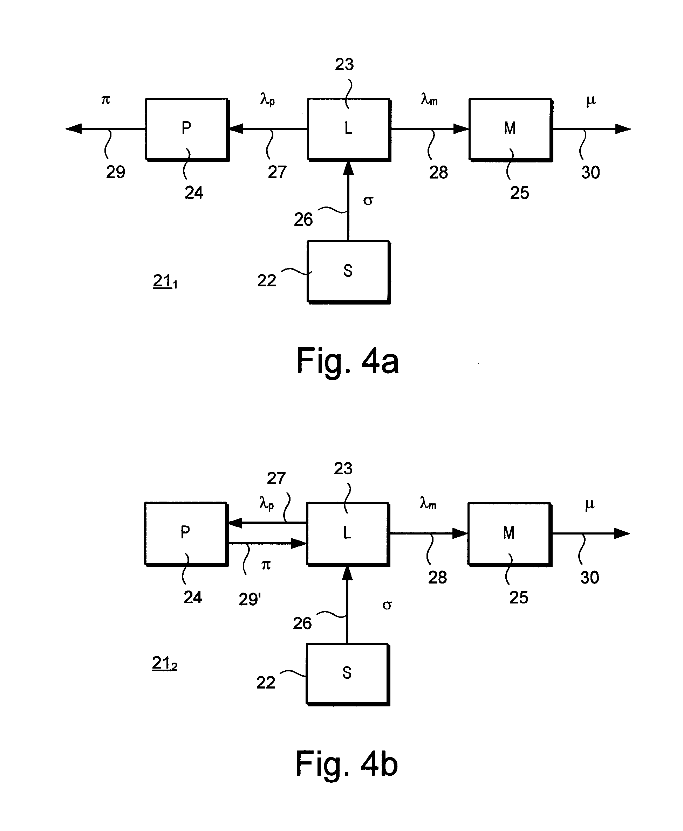

Referring to Figure 4a, a first model $21_1$ of a physical system is shown. The model $21_1$ includes a source 22 and first, second and third compartments 23, 24, 25. A first inflow 26 flows from the source 22 into the first compartment 23. Second and third inflows 27, 28 flow from the first compartment 23 into the second and third compartments 24, 25 respectively. First and second outflows 29, 30 flow out of the second and third compartments 24, 25 respectively.

The first model $21_1$ is described by a set of differential equations, namely:

$$\frac{dS}{dt} = -\sigma S$$

$$\frac{dL}{dt} = +\sigma S - \left(\lambda_p + \lambda_m\right)L$$

$$\frac{dP}{dt} = \quad\quad +\lambda_p L \quad\quad\quad -\pi P \tag{3}$$

$$\frac{dM}{dt} = \quad\quad\quad\quad +\lambda_m L \quad\quad\quad -\mu M$$

In this embodiment, the set of differential equations describes a system in which a drug is absorbed from the stomach 22 into the liver 23 with constant σ. From the first compartment 23, the drug flows into the second and third compartment 24, 25 with constants $\lambda_p$ and $\lambda_m$ respectively. The amount of drug in the second and third compartment 24, 25 decays (due to excretion) with decay constants π and μ respectively.

Referring to Figure 4b, a second model $21_2$ of a physical system is shown. The model $21_2$ is the same as the first model $21_1$ except that the first flow 29 of the first model $21_1$ is replaced by a first flow 29' back, into the first compartment 23. The second model $21_2$ is described by different set of differential equations, namely:

$$\frac{dS}{dt} = -\sigma S$$

$$\frac{dL}{dt} = +\sigma S - \left(\lambda_p + \lambda_m\right)L + \pi P$$

$$\frac{dP}{dt} = \qquad + \lambda_p L \qquad - \pi P \tag{4}$$

$$\frac{dM}{dt} = \qquad\qquad + \lambda_m L \qquad - \mu M$$

The second model $21_2$ may also be referred to as a "first-pass model".

Irrespective of which model is used, if quantities $P$ and $M$ (e.g. of drug) in the second and third compartments 24, 25 respectively are measured at different times and decay constants π and μ are correctly determined, then the inflows into the second and third compartments 24, 25 are $\lambda_p L(t)$ and $\lambda_m L(t)$ respectively. These inflows vary with time, but their ratio $\lambda_p L(t)/\lambda_m L(t) = \lambda_p/\lambda_m$ is time-independent. Conversely, if the two decay constants π and μ are determined such that the ratio of their respective deconvolutions is constant, then this provides the correct values for the two decay constants π and μ. However, if one assumed the wrong decay processes, for example $e^{-\pi't}$ and $e^{-\mu''t}$ respectively, then the corresponding deconvolutions will be $\lambda_p'L'(t)$ and $\lambda_m''L''(t)$, respectively, where $L'(t) \neq L''(t)$. In this case, the time dependence of the ratio $\lambda_p'L'(t)/\lambda_m''L''(t)$ does not cancel and the ratio varies with time.

In this embodiment, it is assumed that the inflows 27, 28 into the second and third compartments 24, 25 originate from the same (unobserved) compartment, i.e. first compartment 23. Thus, the entire topology of the system need not to be known, but only a sub-system relating to the observations need be considered.

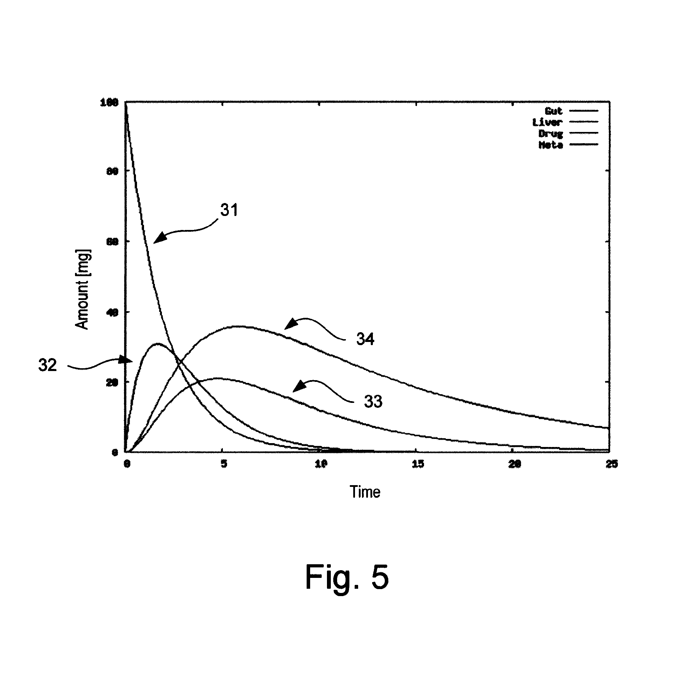

Referring to Figure 5, first, second and third plots 31, 32, 33 of an amount of unmetabolized drug in the gut, liver and blood at different times are shown. A fourth plot 34 of the amount of drug metabolite in the blood at different times is also shown. In this embodiment, the measurement data is generated and so the plots 31, 32, 33, 34 represent behaviour of an idealised system in which the relevant parameters are known. However, actual measurement data can be (and ordinarily would be) used.

The second method can be used to determine whether the models $24_1$, $24_2$ apply and, if so, determine the values of decay parameters, hereafter labelled π and μ.

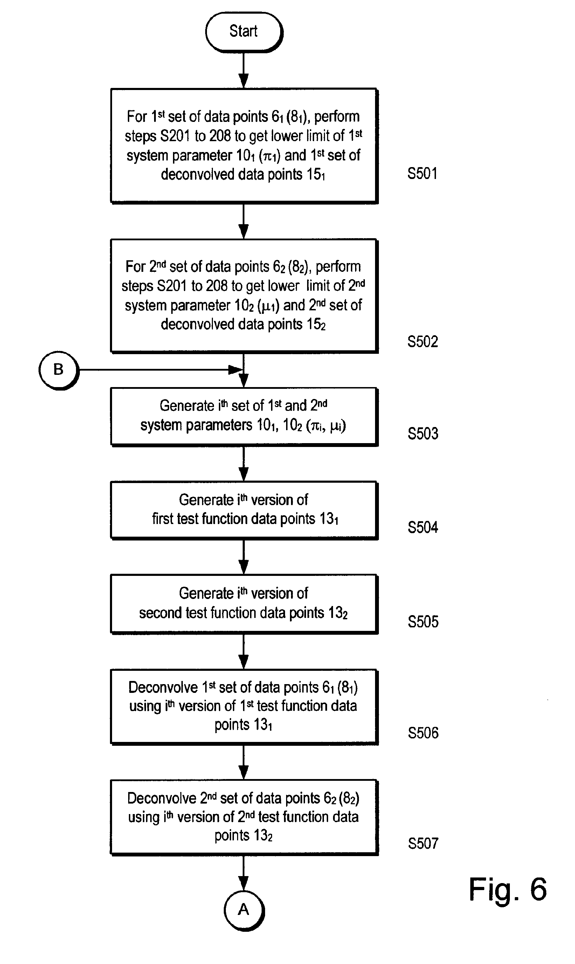

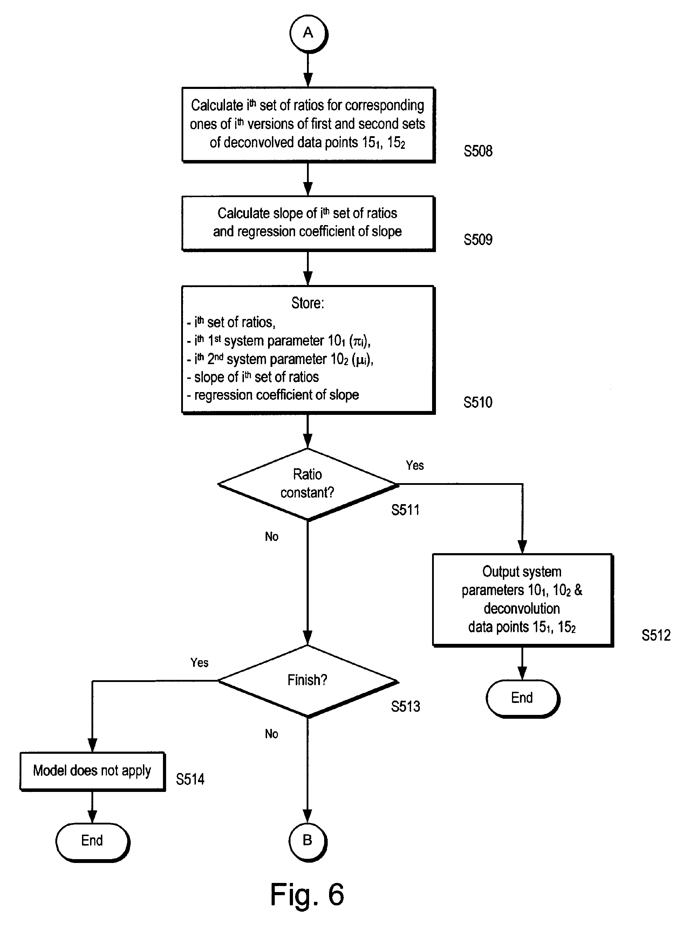

Referring to Figures 1, 2 and 6, the second method of determining systems parameters in accordance with the present invention will now be described.

The measurement apparatus (not shown) takes two sets of measurements of a physical system. The first method is performed for each set of measurements so as to determine a lower limit ($\pi_1$) of a first decay constant $10_1$ and a first set of deconvolved data points $15_1$ (step S501) and also a lower limit ($\mu_1$) of a second decay constant $10_2$ and a second set of deconvolved data points $15_2$ (step S502).

The parameter setting module 9 generates new values ($\pi_i$) of the first decay constant $10_1$ and new values ($\mu_i$) of the second decay constant $10_2$ according to a predetermined method (step S503).

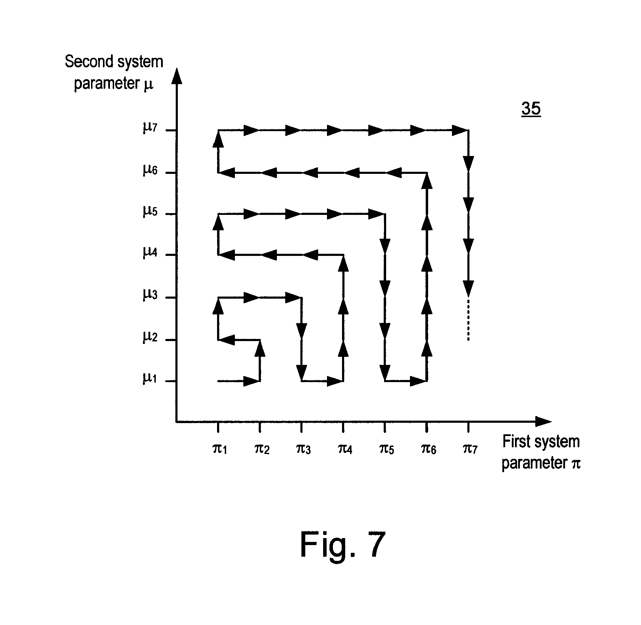

Referring to Figure 7, a pair of values for the first and second decay constants $10_1$, $10_2$ is found by searching a quadrant 35 of solution space by varying the values ($\pi_i$, $\mu_i$) of first and second decay constants $10_1$, $10_2$.

The values ($\pi_i$, $\mu_i$) of the first and second decay constants $10_1$, $10_2$ may be found using other methods, for example by scanning the solution space between predetermined ranges for the first and second decay constants or by randomly selecting pairs of values according to a predetermined probability distribution centred on the lower limits ($\pi_1$, $\mu_1$) of the first and second decay constants $10_1$, $10_2$ and ignoring values of $\pi_i < \pi_1$ and $\mu_i < \mu_1$.

The test function module 11 generates an $i^{th}$ pair of sets of discrete test function values $13_1$, $13_2$ for the first and second pair of values ($\pi_i$, $\mu_i$) (steps S504 & S505).

The deconvolution module 14 deconvolves the first set of measured data $6_1$ ($8_1$), i.e. measurements of $P$, with the $i^{th}$ version of the first set of discrete test function values $13_1$ (step S506) and the second set of measured data $6_2$ ($8_2$), i.e. measurements of $M$, with the $i^{th}$ version of the second set of discrete test function values $13_2$ (step S507).

The decision module 16 calculates an $i^{th}$ set of ratios R for the first and second sets of deconvolved data points $15_1$, $15_2$ for the pair of decay constant values ($\pi_i$, $\mu_i$), by dividing a value of a point (e.g. at time $t_j$) in the first set of deconvolved data point $15_1$ by the value of a corresponding data point in the second set of deconvolved data point $15_2$, i.e. $R_j = P_j/M_j$ for j = 0, 1, ...n,..., N (step S508).

The decision module 16 fits a line to the $i^{th}$ set of ratios R to find a slope $m_i$ and a regression coefficient $C_i$ (step S509).

The decision module 16 stores the $i^{th}$ set of ratios R for the first and second sets of deconvolved data points $15_1$, $15_2$, together with the pair of values ($\pi_i$, $\mu_i$) of decay constants $10_1$, $10_2$, the slope $m_i$ and the coefficient $C_i$ (step S510).

The decision module 16 determines whether the ratio is constant by inspecting the slope $m_i$ and coefficient $C_i$ (step S511). For example, decision module 16 may determined whether the slope $|m_i| < m_0$ (where $m_0$ is is a slope and is positive and close to 0) and $C_i > C_0$ (where $C_0$ is positive and less than and close to 1).

If the ratio is constant, then the decision module 16 outputs the first and second decay constants $10_1$, $10_2$ and the first and second sets of deconvolved data points $15_1$, $15_2$ (step S512).

If the ratio is not constant, then the decision module 16 checks whether the search has finished (step S513).

The decision module 16 determines whether the search of solution space has been exhausted and should be finished (step S514). The criteria for determining whether the search has finished may depend on the method used to find the first and second decay constants

For example, if a method is used which involves searching the quadrant 35 (Figure 7) of solution space and increasing the values ($\pi_i$, $\mu_i$) of first and second decay constants $10_1$, $10_2$, then the search may be terminated after a predetermined number of "tries" (i.e. a predetermined number of combinations). In Figure 7, a "try" is illustrated as an arrow. The search may be terminated once a predetermined number of values of decay constant has been searched, i.e. when $i = I$.

If a method is used which involves randomly selecting a pair of values ($\pi_i$, $\mu_i$), then the search may be terminated after a predetermined number of pairs of values have been generated.

The search may be terminated by inspecting the test functions and determining whether the test function is realistic. For example, for large-enough values of decay constant, the test function will form a Kronecker delta, i.e. the first value is non-zero and subsequent values are indistinguishable from zero. Once this occurs, the search may be stopped, not least because deconvolution of the measurements with a Kronecker delta simply reproduces the (original) measurements.

If the search for a solution has not finished, then the process (steps S503 to S513) is repeated for a new pair of values ($\pi_i$, $\mu_i$).

If no combination of values ($\pi_i$, $\mu_i$) for the first and second decay constants $10_1$, $10_2$ can be found for which the ratio is constant, then this is reported (step S514). In this event, it can be concluded that the model of the subsystem in which two compartments are fed by a single compartment is not appropriate.

The present invention can be used to determine constants in a pharmacokinetic-model that describes pathways for an experimental drug.

During the experiment, a drug is administered. Blood samples are taken at certain times and the concentrations of relevant substances in the blood are determined. The relevant substances could be, for example the unmetabolized drug or its metabolite(s).

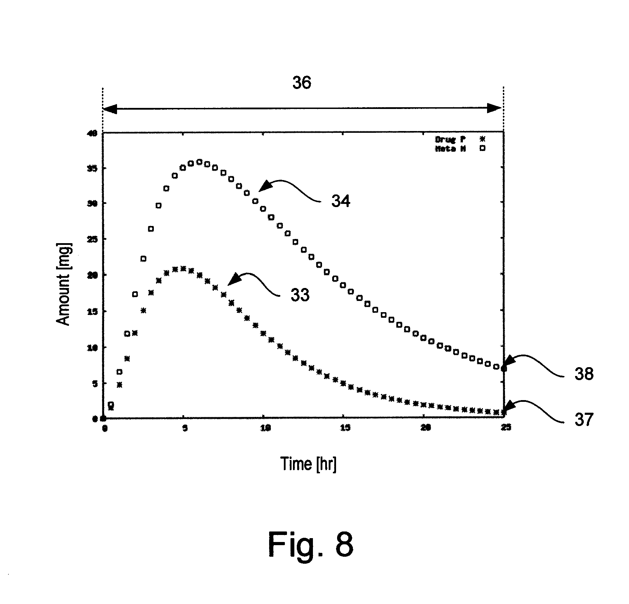

Referring to Figure 8, a first plot 33 of measurements of an amount of unmetabolized drug $P$ at different times and a second plot 34 of measurements of an amount of its (only) metabolite $M$ at different times over a range 36 are shown. The measured data comprises data points which are uniformly spaced. Furthermore, the measured data comparatively densely spaced with respect to the features in the plots. The first and second plots 33, 34 end at points 37, 38 respectively.

A skilled pharmacologist may have reason to assume that the pharmacokinetics is best described by the first model $21_1$ (Figure 4a). However, the true behaviour of the pharmacokinetics of the drug might be more accurately described by the second model $21_2$ (Figure 4b) or indeed by a model not yet specified.

The choice of model will affect the values of $\pi$ and $\mu$, if they are determined using a fitting procedure based on regression. However, properly representative values of $\pi$ and $\mu$ can be found using methods in accordance with the present invention.

Using the first method described earlier, in which flow into and out of a single compartment is considered and in which the outflow has a decay constant $\pi$, the amount of drug in the compartment $P(t)$ can be found by the convolution:

$$P(t) = \left(\lambda_p L(t)\right) \oplus e^{-\pi t}$$

and, inversely, the inflow can be found by deconvolution:

$$\lambda_p L(t) = P(t) \oplus^{-1} e^{-\pi t}$$

$P(t)$ corresponds to $C(t)$ in equations (1) and (2a), $\lambda_p L(t)$ corresponds to $G(t)$ and $e^{-\pi t}$ to $D(t)$.

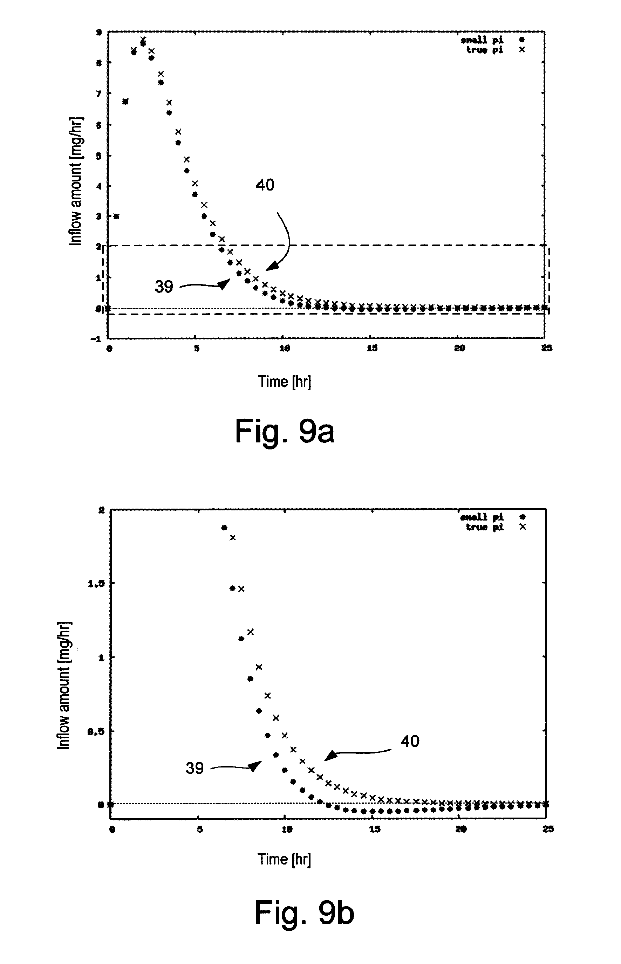

Referring to Figures 9a and 9b, first and second plots 39, 40 for deconvolutions of the drug $P$ using first and second test functions (not shown) having respective first and second values of decay constant are shown.

The first value of the decay constant is too small and so negative values for the deconvolution are obtained.

The value of the decay constant is increased to the second value (in this case, to the true value) when the deconvolution no longer extends into negative regime. Using this method, an accurate value of the decay parameter can be found. If there are any discrepancies, then these tend to be due to factors such as (i) discretisation, (ii) machine precision and (iii) the finiteness of the observation range. It is noted that deconvolution of $P(t)$ and $e^{-\pi t}$ produce $\lambda_p L(t)$, not $L(t)$.

As shown in Figure 8, the range 36 of observations is reasonably large and the last observed values 37, 38 are small. Consequently, the decay constant can be estimated accurately.

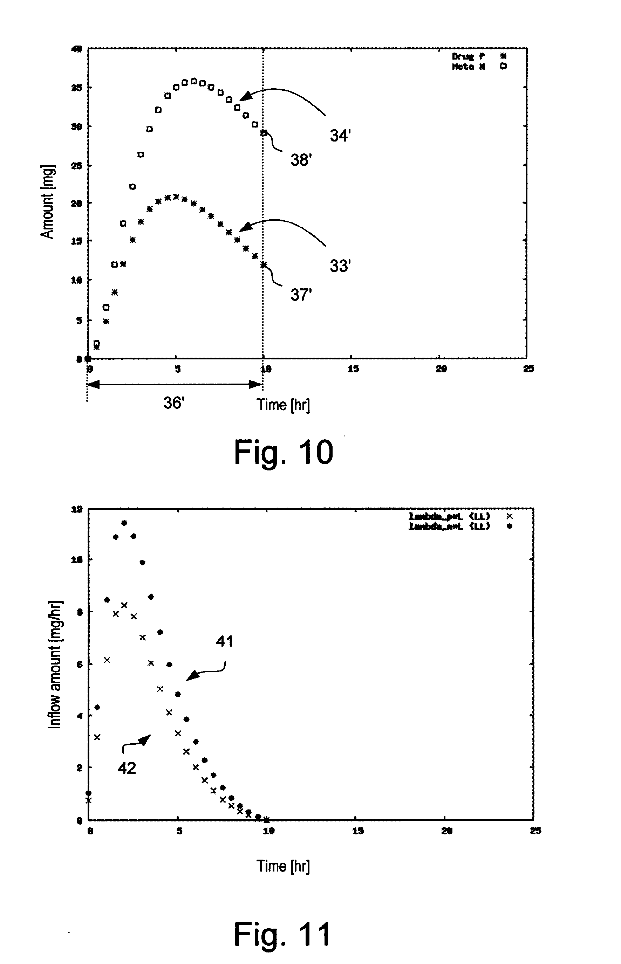

Referring to Figure 10, a first plot 33' of a truncated set of measurements of an amount of unmetabolized drug $P$ against time and a second plot 34' of a truncated set of measurements of an amount of its (only) metabolite $M$ against time are shown.

As shown in Figure 10, the range 36' of observations is considerably reduced and the last measured observations 37', 38' are no longer vanishingly small.

Referring to Figure 11, plots 41, 42 for deconvolutions of the truncated sets of measurements of Figure 10 are shown. Using a truncated set of measurements still allows lower limits of decay constant to be found. In this example, the estimated lower limit of the decay constant is reduced by about 25%.

The second method described earlier is based on a model in which two compartments are fed by one-and-the same compartment. Flows into the two compartments are different because the respective growth constants $\lambda_p$ and $\lambda_m$ are different. However, the flows are proportional to each other.

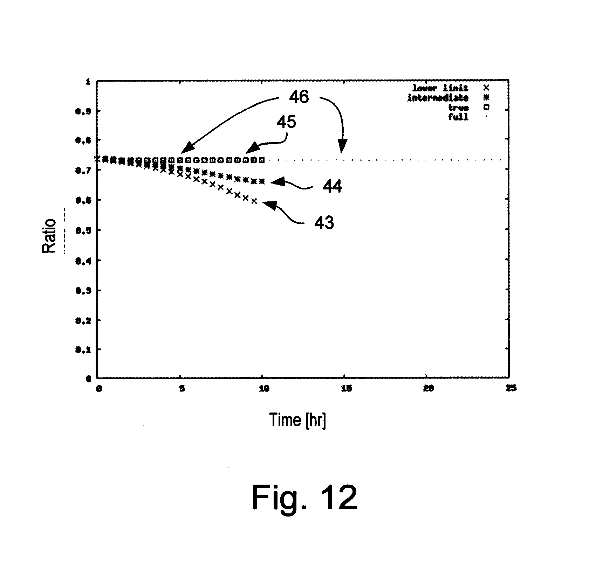

Figure 12 shows a first plot 43 of the ratio of corresponding values of the flows for the un-metabolised drug and its metabolite shown in Figure 11. As shown, the ratio is not constant for a given pair of decay constants, in this case $\pi_1$ and $\mu_1$. However, using the second method, new values of $\pi$ and $\mu$ may be found which provide a ratio which varies less over time.

A second plot 44 of the ratio of corresponding values of the flows for the un-metabolised drug and its metabolite using new values of $\pi$ and $\mu$ using the second method is shown.

A third plot 45 of corresponding values of the flows for the un-metabolised drug and its metabolite using true or representative values of $\pi$ and $\mu$ is shown.

The second plot 44 shows an improvement over the first plot 43. Thus, even for a truncated set of measurements, reasonable values of $\pi$ and $\mu$ can be found.

When a full set of measurements is used (for example as illustrated in Figure 8), then a fourth plot 46 is obtained which coincides with the plot 45 based on the true values of $\pi$ and $\mu$.

Plots of ratio derived by deconvolving functions based on the wrong decay constants need not slope downwards (as shown in Figure 12). The plots can have any shape, e.g. slope upwards or oscillate.

If error bars are used, then a simple ratio plot like that shown in Figure 12 may not be sufficient. More complex measures of similarity, such as those involving integral measures, may need to be considered.

The first method may be used to find the lower limits of $\pi$ and $\mu$, as described earlier. The second method may then be used to find $\lambda_p/\lambda_m$. Finally, the first method can be used (again) to deconvolve $e^{-(\lambda_p + \lambda_m)t}$ to find a lower limit of $\lambda_p + \lambda_m$. Thus, values for $\lambda_p$ and $\lambda_m$ can be found and so a value for $L$ (and also for $\sigma S$) can be determined.

It will be appreciated that many modifications may be made to the embodiments hereinbefore described.

The physical system may be any physical system or part of a physical system in which a quantity (i.e. amount-like property and which can be referred to as an "extensive" property) can vary and which is describable using a set of linear, first-order differential equations with constant coefficients. Values of quantities for first and second systems can be added to provide a new value which is still physically meaningful for the combined system. Examples of quantities include entropy, volume, particle number, (linear or angular) momentum and electrical charge. Respective conjugate variables for those quantities (but which are not themselves amount-like properties and which can be referred to as an "intensive" properties) are temperature, pressure, chemical potential, (linear or angular) velocity and electrical potential. The physical system may be a biological, chemical, mechanical, electrical, molecular, atomic or sub-atomic system. For example, the physical system may be a population of a species or group of species, such as humans, animals, plants or bacteria. The physical system may be a chemical or (industrial) plant process. The physical system may be an electrical circuit or network and measurements may include, for example, measurements of charge. The physical system may be a communications network and measurements may include, for example, measurements of number of packets. The physical system can also be a system which is describable using a set of non-linear differential equations, but which can be approximated over a given range as a set of linear, first-order differential equations. Thus, the methods can be applied to diffusion or heat transfer.

Although it has been described earlier with reference to the specific embodiments to use a distributed computer system, it is possible to use a non-distributed computer system, e.g. a single computer. Furthermore, functions of modules may be combined into one or more different modules.

## Claims

1. A computer system for simulating a physical system having first and second properties which determine a third, measurable property, the computer system comprising:

   a first module (11) adapted to generate a set of simulated values of the first property using a given value of a parameter;
   a second module (14) adapted to deconvolve a set of measured values of the third property using the set of simulated values of the first property so as to provide a set of derived values of the second property; and
   a third module (16) adapted to determine whether any of the derived values of the second property are negative and, in dependence upon any of the derived values being negative, causing the given value of the parameter to be changed.

2. A computer system according to claim 1, wherein the first module (11) is arranged to generate the set of simulated values of the first property using the given value of the parameter by using a function comprising an exponential having an exponent including the given value of the parameter.

3. A computer system according to claim 2, wherein the function is a decay function and the parameter is a decay constant.

4. A computer system according to claim 2 or 3, wherein the exponent includes time as a variable.

5. A computer system according to any preceding claim, further comprising:

   a fourth module (7) adapted to receive the set of measured values of the third property and to provide a set of equally-spaced measured values to the second module (14).

6. A computer system according to any preceding claim, wherein the set of measured values of the first property are equally-spaced in time.

7. A computer system according to any preceding claim, further comprising:

   a fifth module (9) adapted to generate a value of the parameter and to provide said value to the first module (11) to allow generation of a set of simulated values of the first property using said value.

8. A computer system according to claim 7, further comprising a sixth module (19) for outputting the value of the parameter, wherein the third module (16) is adapted to output the value of the parameter to the sixth module.

9. A computer system according to any preceding claim, wherein the set of measured values comprises values of the third property measured at different times.

10. A computer system according to any preceding claim, wherein the first and second properties are flows of an amount of chemical.

11. A computer system according to any preceding claim, wherein the third property is an amount of a chemical.

12. A computer system according to any preceding claim, wherein the third property is an amount of a drug.

13. A computer system according to any preceding claim, wherein the third property is an amount of a metabolite.

14. A computer system according to any preceding claim, wherein the third module (16) is adapted to store said parameter.

15. A computer system according to any preceding claim, adapted to display said parameter.

16. A computer system according to any preceding claim, wherein the physical system has fourth and fifth properties which determine a sixth, measurable property and wherein:

the first module (11) is adapted to generate a first set of simulated values of the first property using a given value of a first parameter and to generate a second set of simulated values of the fourth property using a given value of a second parameter;
the second module (14) is adapted to deconvolve a first set of measured values of the third property using the first set of simulated values so as to provide a first set of derived values of the second property and to deconvolve a second, different set of measured values of the sixth property using the second set of simulated values so as to provide a second set of derived values of the fifth property; and
the third module (16) is adapted to calculate a set of ratios by comparing corresponding ones of the first and second sets of derived values and to determine whether ratios in said set are constant.

17. A computer system according to claim 16, wherein the third module (16) is adapted to fit a line to said set of ratios.

18. A computer system according to claim 16 or 17, wherein the values of the first and second parameters are generated using increasing values of the first system parameter and varying values of the second parameter.

19. A computer system according to any one of claims 16 to 18, wherein the third amount-like property is an amount of a drug and the sixth property is an amount of metabolite.

20. A computer system for simulating a physical system having first and second properties which determine a third, measurable property, the computer system comprising at least one processor and memory, the processor configured to generate a set of simulated values of the first property using a given value of a parameter, to deconvolve a set of measured values of the third property using the set of simulated values of the second property of the physical system so as to provide a set of derived values of the second property and to determine whether any of the derived values of the third property are negative and, in dependence upon any of the derived values being negative, causing the given value of the parameter to be changed.

21. A method of simulating a physical system having first and second properties which determine a third, measurable property, the method comprising:

generating a set of simulated values of the first property using a given value of a parameter;
deconvolving a set of measured values of the third property of the physical system using the set of simulated values of the first property of the physical system so as to provide a set of derived values of the second property of the physical system; and
determining whether any of the derived values of the second property are negative and, in dependence upon any of the derived values being negative, causing the given value of the parameter to be changed.

22. A method according to claim 21, wherein the property is an amount of a chemical.

23. A computer program comprising instructions for performing a method according to claim 21 or 23.

24. A computer program product comprising a computer-readable medium storing a computer program according to claim 13.

Fig. 1

EP 1 884 878 A1

```
                    ┌──────────┐
                    │  Start   │
                    └────┬─────┘
                         │
                         ▼
              ┌─────────────────────┐
              │  Provide measured   │
              │   data points 6     │        S201
              └──────────┬──────────┘
                         │
                         ▼
              ┌─────────────────────┐
              │ Generate conditioned│
              │ data points 8 (optional) │   S202
              └──────────┬──────────┘
                         │
                         ▼
              ┌─────────────────────┐
              │  Initialise system  │
              │    parameter 10     │        S203
              └──────────┬──────────┘
                         │
                         ▼
              ┌─────────────────────┐
              │ Generate test function │
              │   data points 13    │        S204
              └──────────┬──────────┘
                         │
                         ▼
        ┌───────────────────────────────┐
        │ Deconvolve data points 6 (8) to │
        │ produce deconvolved points 15  │   S205
        └───────────────┬───────────────┘
                        │
                        ▼
```

Negative value or too high          Strictly positive values, asymptotic

Assess deconvolution data points 15    S206

Modify system parameter 10    S207

Output system parameter 10 & deconvolution data points 15    S208

End

# Fig. 2

Fig. 3a

Fig. 3b

Fig. 4a

Fig. 4b

Fig. 5

Start

For 1st set of data points $6_1$ ($8_1$), perform steps S201 to 208 to get lower limit of 1st system parameter $10_1$ ($\pi_1$) and 1st set of deconvolved data points $15_1$ — S501

For 2nd set of data points $6_2$ ($8_2$), perform steps S201 to 208 to get lower limit of 2nd system parameter $10_2$ ($\mu_1$) and 2nd set of deconvolved data points $15_2$ — S502

B →

Generate ith set of 1st and 2nd system parameters $10_1$, $10_2$ ($\pi_i$, $\mu_i$) — S503

Generate ith version of first test function data points $13_1$ — S504

Generate ith version of second test function data points $13_2$ — S505

Deconvolve 1st set of data points $6_1$ ($8_1$) using ith version of 1st test function data points $13_1$ — S506

Deconvolve 2nd set of data points $6_2$ ($8_2$) using ith version of 2nd test function data points $13_2$ — S507

A

Fig. 6

A

Calculate $i^{th}$ set of ratios for corresponding
ones of $i^{th}$ versions of first and second sets
of deconvolved data points $15_1$, $15_2$

S508

Calculate slope of $i^{th}$ set of ratios
and regression coefficient of slope

S509

Store:
- $i^{th}$ set of ratios,
- $i^{th}$ $1^{st}$ system parameter $10_1$ ($\pi_i$),
- $i^{th}$ $2^{nd}$ system parameter $10_2$ ($\mu_i$),
- slope of $i^{th}$ set of ratios
- regression coefficient of slope

S510

Ratio
constant?          Yes

S511

No

Output system
parameters $10_1$, $10_2$ &
deconvolution
data points $15_1$, $15_2$

S512

Yes          Finish?

S513

No

Model does not apply    S514

End

End

B

Fig. 6

Fig. 7

Fig. 8

## Fig. 9a

## Fig. 9b

Fig. 10

Fig. 11

Fig. 12

# EP 1 884 878 A1

**European Patent Office**

## EUROPEAN SEARCH REPORT

Application Number

EP 06 11 8311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AHMAD MIRFAZAELIAN, MASSOUD MAHMOUDIAN: "A simple pharmacokinetics subroutine for modeling double peak phenomenon" BIOPHARMACEUTICS & DRUG DISPOSITION, vol. 27, no. 3, 6 January 2006 (2006-01-06), pages 119-124, XP002408275 * the whole document * ----- | 1-24 | INV. G06F17/50 G06F19/00 |
| A | NEELAKANTAN S., VENG-PEDERSEN P.: "Determination of drug absorption rate in time-variant disposition by direct deconvolution using beta clearance correction and end-constrained non-parametric regression" BIOPHARMACEUTICS & DRUG DISPOSITION, vol. 26, no. 8, 2005, pages 353-370, XP002408276 * the whole document * ----- | 1-24 | |
| A | CSAJKA CHANTAL ET AL: "The use of a sum of inverse Gaussian functions to describe the absorption profile of drugs exhibiting complex absorption" PHARMACEUTICAL RESEARCH (DORDRECHT), vol. 22, no. 8, August 2005 (2005-08), pages 1227-1235, XP002408277 ISSN: 0724-8741 * the whole document * ----- | 1-24 | **TECHNICAL FIELDS SEARCHED (IPC)** G06F |
| A | ZHOU HONGHUI: "Pharmacokinetic strategies in deciphering atypical drug absorption profiles." JOURNAL OF CLINICAL PHARMACOLOGY, vol. 43, no. 3, March 2003 (2003-03), pages 211-227, XP009074550 ISSN: 0091-2700 * the whole document * ----- -/-- | 1-24 | |

The present search report has been drawn up for all claims

| Place of search | Date of completion of the search | Examiner |
|---|---|---|
| Munich | 21 November 2006 | WELLISCH, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

**European Patent Office**

**EUROPEAN SEARCH REPORT**

Application Number

EP 06 11 8311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DUTTA SANDEEP ET AL: "A multiphasic absorption model best characterizes gastrointestinal absorption of divalproex sodium extended-release tablets" JOURNAL OF CLINICAL PHARMACOLOGY, vol. 46, no. 8, 19 July 2006 (2006-07-19), pages 952-957, XP009074575 ISSN: 0091-2700 * the whole document * ----- | 1-24 | |
| A | GIACOMETTI J A ET AL: "Thermal pulse measurements on electron-beam irradiated fluoroethylene-propylene copolymer" 8TH INTERNATIONAL SYMPOSIUM ON ELECTRETS. ISE 8 PROCEEDINGS (CAT. NO.94CH3443-9) IEEE NEW YORK, NY, USA, 1994, pages 212-217, XP002408278 ISBN: 0-7803-1940-0 * the whole document * ----- | 1,16 | |
| A | DROVER DAVID R ET AL: "Input characteristics and bioavailability after administration of immediate and a new extended-release formulation of hydromorphone in healthy volunteers" ANESTHESIOLOGY (HAGERSTOWN), vol. 97, no. 4, October 2002 (2002-10), pages 827-836, XP002408279 ISSN: 0003-3022 * the whole document * ----- -/-- | 1,16 | **TECHNICAL FIELDS SEARCHED (IPC)** |

The present search report has been drawn up for all claims

| Place of search | Date of completion of the search | Examiner |
|---|---|---|
| Munich | 21 November 2006 | WELLISCH, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
....................................................................
& : member of the same patent family, corresponding document

EPO FORM 1503 03.82 (P04C01)

**European Patent Office**

**EUROPEAN SEARCH REPORT**

Application Number

EP 06 11 8311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHARTER M K ET AL: "MAXIMUM ENTROPY AND DRUG ABSORPTION" JOURNAL OF PHARMACOKINETICS AND BIOPHARMACEUTICS, vol. 19, no. 5, 1991, pages 497-520, XP009074572 ISSN: 0090-466X * the whole document * ----- | 1,16 | |
| A | PIOTROVSKII V K: "THE USE OF WEIBULL DISTRIBUTION TO DESCRIBE THE IN-VIVO ADSORPTION KINETICS" JOURNAL OF PHARMACOKINETICS AND BIOPHARMACEUTICS, vol. 15, no. 6, 1987, pages 681-686, XP009074573 ISSN: 0090-466X * the whole document * ----- | 1 | |

TECHNICAL FIELDS SEARCHED (IPC)

The present search report has been drawn up for all claims

| Place of search | Date of completion of the search | Examiner |
|---|---|---|
| Munich | 21 November 2006 | WELLISCH, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)